# EUROPÄISCHE PATENTSCHRIFT

(11) **EP 1 894 068 B1**
(45) Veröffentlichungstag und Bekanntmachung des Hinweises auf die Patenterteilung: **07.04.2010**
(21) Anmeldenummer: 05796069.2
(22) Anmeldetag: 21.09.2005
(51) Int. Cl.: G05B 19/4069

(54) **VERFAHREN ZUR QUALITÄTSSICHERUNG BEIM BETRIEB EINER INDUSTRIELLEN MASCHINE**
METHOD FOR QUALITY CONTROL FOR AN OPERATING INDUSTRIAL MACHINE
PROCEDE PERMETTANT LE CONTROLE DE QUALITE POUR UNE MACHINE INDUSTRIELLE EN FONCTION

(30) Priorität: 31.05.2005 DE 102005025338
(43) Veröffentlichungstag der Anmeldung: 05.03.2008
(73) Patentinhaber: SIEMENS AKTIENGESELLSCHAFT, 80333 München (DE)
(72) Erfinder: KOCH, David, 90478 Nürnberg (DE); KREIDLER, Volker, 72379 Hechingen (DE); MUTSCHELLER, Wolfgang, 70178 Stuttgart (DE)
(86) Internationale Anmeldenummer: PCT/DE2005/001662
(87) Internationale Veröffentlichungsnummer: WO 2006/128401

(56) Entgegenhaltungen:
- EP-A- 0 879 675
- DE-A1- 10 311 027
- US-A- 5 208 763
- US-A- 5 808 432

## Beschreibung

Die vorliegende Erfindung betrifft ein Verfahren zum Betrieb einer industriellen Maschine. Die industrielle Maschine ist beispielsweise eine Bearbeitungsmaschine, eine Produktionsmaschine oder ein Handhabungsautomat. Unter einer Bearbeitungsmaschine wird beispielsweise eine Werkzeugmaschine verstanden, welche beispielsweise zur Durchführung eines Drehvorganges, eines Fräsvorganges oder auch eines Schleifvorganges dient. Eine Produktionsmaschine ist beispielsweise eine Kunststoffgussgießmaschine, eine Schlauchbeutelmaschine oder auch eine Druckmaschine. Daneben kann unter einer Produktionsmaschine auch ein Hebezeug verstanden werden, welches beispielsweise als Kran zum Transport eines Gutes vorgesehen ist. Ein typisches Beispiel für einen Handhabungsautomaten ist ein Roboter.

Der Betrieb einer derartigen industriellen Maschine ist simulierbar. Betrifft die industrielle Maschine eine Bearbeitungsmaschine zur Bearbeitung eines Werkstücks, so werden beim Entwurf eines Werkstücks vorteilhafterweise neben technologischen und geometrischen auch qualitative Parameter festgelegt. Die Erfassung und der Nachweis der Einhaltung der qualitativen Parameter können während oder nach der Fertigung durchgeführt werden. Umfang und Zeitpunkt dieser Überwachung können sich beispielsweise nach technologischen oder wirtschaftlichen Erfordernissen richten. In der Regel ist es jedoch vorteilhaft, eine Abweichung von Istgrößen in Bezug auf Sollgrößen frühzeitig festzustellen, so dass insbesondere höhere Folgekosten wie eine Nachbearbeitung oder ein Totalverlust des Werkstückes vermieden werden können. Zur Überwachung technologischer, geometrischer oder auch qualitativer Parameter wird üblicherweise mit einem Qualitätssicherungsprozess gearbeitet. Dieser Prozess begleitet z.B. die Definition, die Konstruktion und die Fertigung eines Werkstücks. So kann beispielsweise eine Spezifikation erstellt werden, welche festlegt, welche Parameter (technologische, geometrische, ...) für die Qualität eines Werkstücks relevant sind und in welcher Art und Weise diese Parameter zu überwachen und zu dokumentieren sind. Je mehr Parameter überwacht werden müssen, desto mehr Aufwand ist notwendig.

Zur Sicherung der Einhaltung obig genannter Parameter werden in der Regel Messungen zu bestimmten Zeitpunkten während oder nach einem Produktionsprozess durchgeführt. Eine derartige Messung betrifft beispielsweise auch die Oberflächengüte oder einen Toleranzwert eines geometrischen Maßes. Oftmals erfolgt die Qualitätssicherung mithin in nachgelagerten Prozessschritten auf eigens hierfür zur Verfügung gestellten Maschinen mit entsprechend hohen Aufwand und Kosten. Eine übliche Vorgehensweise besteht darin, dass Prozessdaten einer Fertigung eines Werkstückes aufgenommen werden und dessen Qualität durch Messungen nachgewiesen wird. Während der Bearbeitung weiterer gleicher Teile (Werkstücke) können die dann gemessenen Prozessdaten kontinuierlich mit den Daten des Gutteils verglichen werden. So ist es möglich frühzeitig Abweichungen von Sollgrößen festzustellen. Diese Vorgehensweise ist jedoch umständlich und sehr zeitintensiv.

Der Betrieb der industriellen Maschine betrifft insbesondere auch eine Bearbeitung eines Werkstückes auf einer numerisch gesteuerten Bearbeitungsmaschine. Dabei wird auch unter einer Computer numerisch gesteuerten Bearbeitungsmaschine (CNC-Maschine) eine numerisch gesteuerte Bearbeitungsmaschine verstanden, wobei die Bearbeitungsmaschine eine Werkzeugmaschine sein kann. Zur Bearbeitung des Werkstückes können zwei oder mehrere Bearbeitungsschritte vorgesehen sein. Ein Verfahren zur Bearbeitung eines Werkstücks schließt somit auch ein Simulationsverfahren für eine dreidimensionale Bearbeitung durch eine CNC-gesteuerte Bearbeitungsmaschine, insbesondere eine Fräsmaschine und einen hierfür notwendigen beschreibenden Datensatz ein.

Bei numerisch gesteuerten Bearbeitungsmaschinen, wie insbesondere CNC-gesteuerten Bearbeitungsmaschinen, wird ein Werkstück entweder von einem Programmierter direkt codiert oder das Werkstück wird mittels eines CAD-Systems modelliert und dann in ein äquivalentes CNC-Teileprogramm umgewandelt. Das CNC-Teileprogramm bzw. das CAD-Modell entsprechen dabei idealisierten Bearbeitungsanweisungen für die Bearbeitungsmaschine. Das CNC-Programm wird in eine CNC-Steuerung geladen und die Bearbeitungsmaschine entsprechend dem CNC-Programm gesteuert. Wenn das so gefertigte Werkstück innerhalb der gewünschten Fertigungstoleranzen eines idealen Werkstücks liegt, stellen sich bei dieser Vorgehensweise keine Probleme. Entspricht das gefertigte Werkstück hingegen nicht den Anforderungen, stellt sich die Frage, aufgrund welcher Variationen ein ordnungsgemäßes Werkstück fertigbar ist.

Um Fehler zu korrigieren ist es zwar möglich, nacheinander einzelne Bearbeitungsanweisungen und/oder einzelne Betriebsparameter der Bearbeitungsmaschine zu ändern, ein neues Werkstück zu fertigen und dann dieses erneut gefertigte Werkstück zu überprüfen, jedoch ist diese Vorgehensweise sehr mühsam und darüber hinaus kosten-, material- und zeitintensiv. Dies gilt ganz besonders auch deshalb, weil oftmals nicht bekannt ist, wo die Ursache für die Abweichungen des tatsächlich gefertigten Werkstücks vom gewünschten Werkstück zu suchen ist.

Aus der DE 10 311 027 A1 ist ein Mess- und Simulationssystem für Werkzeug- oder Produktionsmaschinen bekannt, das für die graphische Gegenüberstellung von Mess- und Simulationsdaten verwendet wird. Die graphische Gegenüberstellung wendet sich an einen Bediener, der anhand von Abweichungen in der Gegenüberstellung Veränderungen an Regel- und Steuerparametern der Maschine vornehmen kann, um diese optimal einzustellen.

Aus der EP 0879675 ist ein Simulationsverfahren für NC "machining" auf Basis einer Werkstückform, einer Werkzeugform und eines NC Programms bekannt, wodurch eine Vorschub-Kontrolle ("feed forward control") und optimale "cutting conditions" erreicht werden soll.

Die US 5,208,763 gibt ein mit Sensoren ausgestattetes Maschinenwerkzeug mit einem Datenverarbeitungssystem an, welches Position und Orientierung eines Werkstücks in Bezug zu einem Modell des Werkstücks anhand von am Werkstück ermittelten Koordinaten von Oberflächenpunkten ermittelt. Auf Basis dessen wird eine Transformation des Werkstücks bestimmt, durch welche sich eine geringere Differenz der relativen Raumkoordinaten von Werkstück und Modell ergeben soll.

Die US 5,808,432 befasst sich mit Problemen, die sich ergeben sollen, wenn bei kleinsten Werkstücken eine Regelung der Abläufe des Bearbeitungsvorgangs nicht mehr ausreicht. Zum einen soll dafür, wenn nach einer visuellen Kontrolle festgestellt wird, dass bei einem Werkstück die geforderte Geometrie nicht erreicht wird, vor Verwendung eines anderen Werkzeugs durch Simulation ermittelt werden, ob der Übergang zu dem neuen Werkzeug sinnvoll ist. Zum anderen soll der Betrieb der Maschine überwacht werden, wobei bei Abweichungen Maschinenparameter verändert und vor einer konkreten Verwendung an der Maschine mittels einer Simulation auf Tauglichkeit geprüft werden.

Bei der Fertigung insbesondere komplexer Teile, insbesondere bei Teilen mit hohem Zerspanungsvolumen, wie diese zum Beispiel im Flugzeugbau oder auch im Turbinenbau für Kraftwerke vorkommen, sind mehrere Prozessschritte mit unterschiedlichen Werkzeugen erforderlich. Da für die einzelnen Teilprozesse zur Herstellung eines Teiles, wobei das Teil ein Werkstück ist, kein CAD-Modell existiert, kann heute die Qualität der Teilprozesse nicht direkt gemessen werden. Lediglich das Ergebnis des Gesamtprozesses kann auf einer Messmaschine oder auch auf der Fertigungsmaschine gemessen werden. Dies bedeutet, dass auch Fehler, die bereits im ersten Prozessschritt aufgetreten sind immer erst nach der Fertigstellung des gesamten Teiles, z.B. einer Turbinenschaufel, entdeckt werden können. Diese Vorgehensweise kann beispielsweise zu folgenden Problemen führen:
- Teile/Werkstücke werden immer fertig produziert, auch dann wenn bereits kurz nach dem Beginn der Fertigung ein irreparabler Schaden am Teil entstanden ist, der nicht erkannt wurde. Dadurch wird wertvolle Maschinenzeit verschenkt;
- Die bislang übliche Vermessung der Teile auf einer Messmaschine ist sehr kostenintensiv, da zum einen die Messmaschinen für große Teile sehr teuer sind, zum anderen die Aufspannung der zum Teil sehr großen Werkstücke auf die Messmaschine äußerst aufwändig ist;
- Fehler in der Produktion werden oft erst Wochen nach der Teilefertigung erkannt, mit der Folge, dass in dieser Zeit u.U. eine ganze Teileserie fehlerhaft gefertigt wurde;
- Fehler die auf bislang bekannte Weise erkannt wurden, lassen sich in den seltensten Fällen eindeutig einem Teilprozess zuordnen, so dass die Fehlerkorrektur wiederum sehr aufwändig wird, weil alle Teilprozesse untersucht werden müssen.

Die Aufgabe der vorliegenden Erfindung besteht darin, eine Möglichkeit zu schaffen, auf erheblich schnellere, einfachere und/oder kostengünstigere Weise als im Stand der Technik Fehler bei einer insbesondere schrittweise erfolgenden Bearbeitung eines Werkstücks zu erkennen. Dies ist insbesondere bei geringen Losgrößen wie z.B. 1 von Vorteil.

Die Aufgabe wird durch ein Verfahren gelöst, welches die Merkmale nach Anspruch 1 aufweist. Die abhängigen Ansprüche betreffen vorteilhafte Weiterbildungen. Der Anspruch 14 betrifft ein System zur Durchführung eines der erfindungsgemäßen Verfahren.

Bei einem erfindungsgemäßen Verfahren zur Qualitätssicherung beim Betrieb einer industriellen Maschine wird zumindest ein Teil des Betriebs der industriellen Maschine mittels eines Simulationsmodells simuliert, wobei Simulationsergebnisse und reale Daten aus dem Betrieb der industriellen Maschine gespeichert werden. Die industrielle Maschine ist beispielsweise eine Bearbeitungsmaschine, eine Produktionsmaschine oder ein Handhabungsautomat. Gemäß des Verfahrens ist es möglich, dass bei einer Überwachung einer Bearbeitungsqualität der Bearbeitungsmaschine während der Bearbeitung gemessene Prozessgrößen mit aus einem Simulationsmodell berechneten Prozessgrößen verglichen werden können. Ein System zur Durchführung des Verfahrens weist beispielsweise einen Rechner auf, der mit der Steuerung und/oder Regelung der Bearbeitungsmaschine beispielsweise über eine datentechnische Verbindung unter Zuhilfenahme eines Intranet bzw. eines Internets zum Zwecke des Informationsaustausches verbunden ist. Auf dem Rechner, welcher eine Simulationseinrichtung darstellt, befindet sich ein Simulationsmodell für die industrielle Maschine. Ein derartiges Modell weist insbesondere verschiedene Modelle für Teilkomponenten der industriellen Maschine auf. Modelle für Teilkomponenten der industriellen Maschine betreffen beispielsweise eine Steuerungs- bzw. Regelungssimulation, eine Simulation der Kinematik, eine Simulation der Bearbeitungsschritte (dies betrifft z.B. ein Teileprogramm) oder dergleichen.

In einer Ausgestaltung weist der Rechner zur Simulation eine Verbindung zu einer realen Werkzeugmaschine zum Vergleich der realen aufgezeichneten Prozessgrößen mit berechneten Prozessgrößen aus dem Simulationsmodell auf. Der Vergleich wird entweder zeitgleich zur Bearbeitung oder zu einem späteren Zeitpunkt durchgeführt und erfolgt auf dem Rechner und/oder auf der Steuerungs- bzw. Regelungseinrichtung der Werkzeugmaschine. Wenn der Vergleich auf der Werkzeugmaschine erfolgt, werden die Simulationsergebnisse vom Rechner auf die Steuerung und/oder Regelung der Werkzeugmaschine übertragen. Wenn der Vergleich auf dem Rechner folgt, wobei dieser Vergleich insbesondere nachgelagert zu einer Fertigung erfolgt, werden die Prozessinformationen von der Werkzeugmaschine zum Rechner übertragen. Die Ermittlung der Simulationsergebnisse erfolgt insbesondere unter Verwendung einer Steuerungssimulation, d.h. eines Modells für die Steuerung auf dem Rechner. Die Konfiguration der Steuerungssimulation erfolgt vorteilhaft über eine Verbindung zur Werkzeugmaschine unter Verwendung eines Datentransfers über das Intranet bzw. das Internet. Zur Konfiguration der Simulation werden Maschinendaten der Steuerung verwendet. Ein durchgeführter Vergleich von Daten beruht beispielsweise auf gemessenen und simulierten Werten für eine Position oder eine Orientierung eines Werkzeugs, eine Achsposition eine Drehzahl, eine Geschwindigkeit oder durch den Vergleich von auftretenden Kräften.

Das Verfahren ist folglich derart ausbildbar, dass die Simulation auf der industriellen Maschine durchgeführt wird, wobei zumindest teilweise eine Parametrierung des Simulationsmodells mittels einer Einrichtung zur Parametrierung des Simulationsmodells durchführbar ist, wobei zwischen der industriellen Maschine und der Einrichtung zur Parametrierung des Simulationsmodells eine datentechnische Verbindung mittels einer Internet- und/oder Intranetverbindung herstellbar ist.

In einer weiteren Ausgestaltung des Verfahrens ist die Simulation auf einer externen Simulationseinrichtung durchführbar, wobei die externe Simulationseinrichtung mit der industriellen Maschine mittels einer Intranet- und/oder einer Internetverbindung datentechnisch verbindbar bzw. verbunden ist.

Bei bislang verwendeten Verfahren zur Qualitätssicherung wurden Prozesswerte einer Fertigung eines Produktionsgutes mit den Werten eines Gutteils verglichen. Das Gutteil ist ein Teil, welches gemäß den Vorgaben richtig gefertigt wurde und keine Fehler aufweist. Diese Vorgehensweise des Vergleiches setzt voraus, dass bereits ein Gutteil vorhanden ist. Mit dem erfindungsgemäßen Verfahren kann bereits die Entstehung des ersten Gutteils überwacht werden. Dies ist besonders wichtig bei Losgrößen 1 für die bislang eine derartige Qualitätssicherung nicht möglich war. Die erfindungsgemäße Durchführung einer Simulation ermöglicht im Vorfeld der Fertigung Solldaten mit hoher Präzision zu erzeugen, die unmittelbar der Qualitätssicherung dienen, wobei dies parallel zur Produktion erfolgt.

Die datentechnische Verbindung einer industriellen Maschine mit einem externen Rechner über ein Netzwerk, wie dies ein Intranet bzw. ein Internet darstellt, macht es möglich, Ergebnisse direkt aus der Arbeitsvorbereitung zum Zwecke der Qualitätssicherung in der Fertigung einzusetzen und Daten der Fertigung wie insbesondere Traces in der Arbeitsvorbereitung zur Dokumentation der Produktion zu verwenden.

Ein erfindungsgemäßes System bzw. die Durchführung des erfindungsgemäßen Verfahrens ermöglicht es auch, eine kontinuierliche gesicherte und dokumentierbare Überwachung von Bearbeitungsprozessen gemäß eines festgelegten Qualitätssicherungsmanagementsprozesses durchzuführen. Weiterhin ergibt sich aus der Erfindung die Möglichkeit, dass beispielsweise Werkstückhersteller die Überwachung der Qualität beispielsweise durch externe Einrichtungen durchführen lassen. Diese externen Einrichtungen weisen dabei z.B. einen Server auf, welcher eine Datenverbindung zum Internet hat. Der Server ist zur Durchführung der Simulation und/oder zumindest zur Übermittlung von Simulationsergebnissen vorgesehen.

Ein weiteres vorteilhaftes Verfahren betrifft die Bearbeitung eines Werkstückes auf einer numerisch gesteuerten Bearbeitungsmaschine, wobei zur Bearbeitung des Werkstückes zwei oder mehrere Bearbeitungsschritte benötigt werden und demzufolge auch vorgesehen sind. Zur Steuerung und/oder Regelung der numerisch gesteuerten Bearbeitungsmaschine ist ein Bearbeitungsdatensatz vorgesehen, welcher in einer Steuerungs- und/oder Regelungseinrichtung der numerisch gesteuerten Bearbeitungsmaschine zusammen mit einem Programm zum Betrieb der Steuerungs- und/oder Regelungseinrichtung ablauffähig ist. Der Bearbeitungsdatensatz ist beispielsweise zumindest ein Teileprogramm. Die Bearbeitungsmaschine ist insbesondere eine Werkzeugmaschine oder auch eine Produktionsmaschine bzw. ein Handhabungsautomat. Eine Werkzeugmaschine kann beispielsweise für folgende Bearbeitungen vorgesehen sein: Bohren, Fräsen, Schleifen, Drehen, usw. Die Bearbeitungsmaschine weist eine Steuerungs- und/oder Regelungseinrichtung wie z.B. eine NC-Steuerung oder auch eine CNC-Steuerung auf, wobei derartige Steuerungen entweder in die Bearbeitungsmaschine integriert sind oder auch diesen funktionell zugeordnet sind. Zum Betrieb der Steuerungs- und/oder Regelungseinrichtung ist ein Betriebssystem notwendig, welches auch NC-Kern (NCK) genannt wird. Dieser NC-Kern stellt eine Runtime-Software dar. Gemäß des erfindungsgemäßen Verfahrens werden Simulationsdaten erzeugt. Diese Simulationsdaten werden aus dem Bearbeitungsdatensatz zusammen mit dem Programm (NCK) zum Betrieb der Steuerungs- und/oder Regelungseinrichtung in einem Simulationsschritt erzeugt. Die Simulation kann in einem oder auch in mehreren Schritten erfolgen. Die Simulationsdaten sind insbesondere die Daten, welche durch die Bearbeitung des Teileprogramms durch den NCK entstehen. Zur Berechung dieser Simulationsdaten, kann entweder der reale NC-Kern auf der Steuerungs- und/oder Regelungseinrichtung verwendet werden, oder auch ein simulierter NC-Kern. Den simulierten NC-Kern kann man auch als virtuellen NC-Kern VNCK bezeichnen, wobei dieser beispielsweise auf einem Rechner abläuft, welcher nicht zur Steuerung und/oder Regelung der Bearbeitungsmaschine vorgesehen ist. Der Rechner ist beispielsweise über das Internet und oder das Intranet mit der Bearbeitungsmaschine datentechnisch verbunden. In einer fortentwickelten Ausführungsform ist der VNCK in der Steuerungs- und/oder Regelungseinrichtung integriert. Weiterhin werden gemäß des erfindungsgemäßen Verfahrens nach der Erzeugung der Simulationsdaten diese einer Materialabtragssimulation übergeben, wobei aus den Simulationsdaten simulierte Materialabtragsdaten erzeugt werden. Aus den simulierten Materialabtragsdaten können dann mittels einer Berechnung aus den ursprünglichen Geometriedaten des Werkstücks und eben den Materialabtragsdaten die Geometriedaten des Werkstücks nach einem bestimmten und/oder nach einem beliebigen Bearbeitungsschritt berechnet werden. Die Geometriedaten nach einem x'ten Bearbeitungsschritt werden dann vorteilhafter Weise mit real gemessenen Geometriedaten nach dem x'ten Bearbeitungsschritt verglichen. Stimmen die gemessenen Geometriedaten mit den berechneten - simulierten - Geometriedaten überein, so kann der nächste Bearbeitungsschritt durchgeführt werden. Stimmen die gemessenen Geometriedaten mit den berechneten - simulierten - Geometriedaten nicht überein, so kann die Abweichung der Geometriedaten berechnet werden. Aufgrund der Abweichung kann automatisiert ermittelt werden, ob das zu bearbeitende Werkstück mittels einer Nachbearbeitung weiter verwendet werden kann, oder ob das zu bearbeitende Werkstück einer weiteren Bearbeitung entzogen werden muss. Vorteilhafter Weise erfolgt unter zu Hilfenahme der abweichenden Geometriedaten entweder automatisiert die Abänderung eines Bearbeitungssatzes für einen nachfolgenden Bearbeitungsschritt oder auch die Neuberechnung des Bearbeitungssatzes für einen neu einzufügenden Bearbeitungsschritt.

Bei dem erfindungsgemäßen Verfahren wird eine Simulation einer Bearbeitung eines Werkstückes verwendet. Dabei wird der die Bearbeitung auf der Bearbeitungsmaschine beschreibende Datensatz - der Bearbeitungsdatensatz - verwendet. Folglich kann eine Sollbearbeitung durch idealisierte Bearbeitungsanweisungen für die Bearbeitungsmaschine aufgrund eines beschreibenden Ausgangsdatensatz bestimmt werden. Der Ausgangsdatensatz ist dabei der Beschreibungsdatensatz.

Mit Hilfe des erfindungsgemäßen Verfahrens können wesentliche Nachteile des bislang bekannten Verfahrens zur Bearbeitung eines Werkstückes in mehreren Bearbeitungsschritten auf einer numerisch gesteuerten Bearbeitungsmaschine überwunden werden.

Bislang wurde zur Simulation eine NC-Verifikationssoftware verwendet, welche das Programm zum Betrieb der Bearbeitungsmaschine nur unzureichend nachgebildet hat. Zur Erzeugung der Simulationsdaten wird nunmehr erfindungsgemäß die Software des NC-Kerns selbst verwendet. Hierbei kann allerdings auch ein virtueller NC-Kern VNCK, also ein nicht auf der Bearbeitungsmaschine selbst ablaufender NC-Kern verwendet werden. Da der VNCK das Steuerungsverhalten exakt wiedergibt, können auch kleinere geometrische Abweichungen, die durch Steuerungsfunktionen wie z.B. einem Kompressor, einer Eckenverrundung oder einer Werkzeugkorrektur erzeugt werden, bereits in der Simulation erkannt werden. Dadurch, dass derartige Steuerungsfunktionen, welche im NC-Kern vorliegen bei der Erzeugung der Simulationsdaten mit berücksichtigt werden, erhöht sich deren Genauigkeit wesentlich. Mit diesen Daten und mit Hilfe der nachfolgenden Materialabtragssimulation können die Geometriedaten von Zwischenschritten in der Bearbeitung eines Werkstückes sehr genau berechnet werden. Somit ist stets eine genau Kontrolle der Exaktheit des Bearbeitungsfortschritts gewährleistet, da Messdaten mit Simulationsdaten verglichen werden können.

Vorteilhaft ist es folglich, wenn in der Materialabtragssimulation Daten aus dem Bearbeitungsdatensatz und/oder aus dem Programm zum betrieb der Steuerungs- und/oder Regelungseinrichtung, dem NC-Kern, übernommen werden. Der Einsatz der Materialabtragssimulation ist im Übrigen auch deswegen von Bedeutung, weil der NC-Kern (NCK) bzw. der VNCK bei seinen Ausgabedaten z.B. Werkzeuggeometrien bereits mit berücksichtigt hat. Da zur Fertigung gleicher Werkstücke unter Verwendung lediglich eines Bearbeitungsdatensatzes, also z.B. lediglich eines Teileprogramms, verschiede Werkzeuge mit unterschiedlichen Werkzeuggeometrien verwendet werden können berechnet der NCK bzw. der VNCK unterschiedliche Ausgabedaten abhängig von der ihm bekannten Werkzeuggeometrie. Diese Variationsmöglichkeiten sind durch die Materialabtragssimulation wieder korrigierbar. Aus Materialabtragungsdaten sind demzufolge simulierte Geometriedaten eines Werkstücks erzeugbar, welche für Zwischenmessungen zur Verifikation einer korrekt ablaufenden Bearbeitung eines Werkstücks heranziehbar sind. Vorteilhafter Weise werden werkzeugspezifische Daten wie z.B. Radien von Fräswerkzeugen vom NCK bzw. vom VNCK an die Materialabtragungssimulation automatisch übermittelt.

Die Materialabtragssimulation wird in einer vorteilhaften Ausgestaltung dazu benutzt, für jeden Teilschritt ein Messprogramm zu erzeugen. Bisher war es so, dass als Referenz zur Messung lediglich das CAD-Modell zur Verfügung stand. Das heißt, dass man immer nur das komplett bearbeitete Teil korrekt vermessen konnte. Eine NC-Verifikationssoftware mit einem unterlegten VNCK ist nun in der Lage, für jeden Bearbeitungsschritt den Materialabtrag exakt darzustellen. Sie ist damit in der Lage, nach jedem Schritt eine Sollgeometrie zu erzeugen, die einem CAD-Modell für jeden Prozessschritt entspricht. Damit ist man in der Lage, das Ergebnis jedes Teilschrittes zu einem Geometriemodell zu referenzieren und die Sollwertvorgaben für Kontrollmessungen nach jedem Schritt zu erzeugen. Diese Sollwertvorgaben liegen z.B. in Form von Messprogrammen vor, die auf die Maschinensteuerung geladen werden. Zu jedem Bearbeitungsprogramm oder Programmabschnitt existiert nun das korrespondierende Messprogramm.

Durch das erfindungsgemäße Verfahren ist es nunmehr möglich das Ergebnis jedes einzelnen Bearbeitungsschrittes direkt auf der Bearbeitungsmaschine zu überprüfen, indem beispielsweise ein Messtaster anstelle des Werkzeugs eingewechselt wird und ein Messprogramm abgearbeitet wird. Durch Vergleich der Soll- und Istwerte, die beide protokolliert werden können, kann ein Maschinenbediener direkt erkennen, ob das Ergebnis der Bearbeitung im erlaubten Toleranzbereich liegt. Im Fehlerfall wird der Prozess sofort unterbrochen und es kann mit der Fehleranalyse begonnen werden.

Diese Vorgehensweise ist gegenüber dem herkömmlichen Verfahren deutlich einfacher, da der Fehler einem einzigen Bearbeitungsschritt zugeordnet werden kann. Darüber hinaus wird vermieden, dass wertvolle Maschinenzeit mit einem Teil verschwendet wird, das bereits zerstört ist. Ist das Ergebnis jedes Teilschrittes positiv, ist durch die Messprotokolle der Nachweis erbracht, dass der Gesamtprozess erfolgreich war und das erzeugte Teil den Spezifikationen entspricht. Eine separate Vermessung auf einer Messmaschine kann damit entfallen.

Soll die Qualität der Simulation und der Messung in der Bearbeitungsmaschine mittels eines Messtasters überprüft werden, so ist zusätzlich der Einsatz einer Messmaschine möglich.

Um die Stabilität des Prozesses der Überprüfung von Bearbeitungsschritten mittels Simulationsdaten zu verbessern, wird die Bearbeitungsmaschine periodisch kalibriert. Dies wird z.B. durch ein Verfahren sichergestellt, mit dessen Hilfe in regelmäßigen Zeitabständen der Zustand der Bearbeitungsmaschine und damit auch ihre geometrische Güte überwacht wird. Dies ist auch unter dem Schlagwort "Electronic fingerprints for machine tools and production" machines bekannt.

In einer weiteren vorteilhaften Ausgestaltung ist der NC-Kern in eine Materialabtragsimulation integriert. Dies bringt z.B. eine erhebliche Verbesserung der NC-Programme bereits am Programmierplatz. Die Integration bringt auch den Vorteil, dass zu jedem Teilprozess eine Referenzgeometrie erzeugt wird, die die automatische Vermessung der Teilergebnisse auf der Bearbeitungsmaschine ermöglicht.

Durch das erfindungsgemäße Verfahren können Probleme bei der Bearbeitung eines Werkstückes zum frühest möglichen Zeitpunkt erkannt werden. Es ist vermeidbar, dass der Prozess der Fertigung fortgesetzt wird und damit teure Maschinenzeit verschwendet wird, falls ein Fehlabtrag stattgefunden hat. Das Verfahren vereinfacht in hohem Maße die Fehleranalyse, da Fehler direkt einem Teilprozess zugeordnet werden können. Fehlerursachen werden schneller erkannt und können damit auch schneller beseitigt werden. Die nach dem Stand der Technik nötige teure Infrastruktur zur gesonderten Vermessung der fertigen Teile kann durch das erfindungsgemäße Verfahren entfallen, ohne dass daraus Qualitätseinbußen entstehen.

Bei einem erfindungsgemäßen Verfahren ist es möglich, dass ein Werkstück gemäß eines ersten Bearbeitungsdatensatzes in einem ersten Bearbeitungsschritt bearbeitet wird und Geometriedaten des Werkstückes gemessen werden, wonach die gemessenen Geometriedaten des Werkstückes mit den simulierten Geometriedaten verglichen werden. Stimmen die Geometriedaten nicht überein, bzw. sind die vorgegebenen Toleranzen überschritten, so kann frühzeitig ein neuer Bearbeitungsdatensatz generiert werden mit welchem in einem anschließenden Bearbeitungsschritt das Werkstück in korrigierter Form weiterbearbeitet wird.

Der Vergleich von Geometriedaten kann beispielsweise wie folgt ablaufen. Ein Werkstück wird gemäß eines ersten Bearbeitungsdatensatzes in einem ersten Bearbeitungsschritt bearbeitet wonach Geometriedaten des Werkstückes gemessen werden. Danach werden aus den gemessenen Geometriedaten des Werkstückes Materialabtragsdaten errechnet, wonach die errechneten Materialabtragsdaten mit den simulierten Materialabtragsdaten verglichen werden. In einer weiteren vorteilhaften Ausgestaltung erfolgt die Simulation in Echtzeit parallel zur realen Bearbeitung des Werkstücks oder auch nach der Bearbeitung des Werkstücks in einem Bearbeitungsschritt, da es so möglich ist, Daten des realen NC-Kerns auch für den virtuellen NC-Kern zu verwenden. Beispiele für derartige Daten sind insbesondere veränderliche Größen wie Raumtemperatur, Fehlermeldungen, usw.

In einer vorteilhaften Ausgestaltung wird wie obig bereits angemerkt der Unterschied zwischen den gemessenen Geometriedaten und den simulierten Geometriedaten bzw. zwischen den gemessenen Materialabtragsdaten und den simulierten Materialabtragsdaten berechnet, wonach abhängig von einem Überschreiten einer Differenzschwelle ein für einen folgenden Bearbeitungsschritt vorgesehener Bearbeitungsdatensatz abgeändert wird.

Die bei der Erfindung durchgeführten Simulation des NC-Kerns kann z.B. auf der Steuerungs- und/oder Regelungseinrichtung und/oder auf einem Simulationsrechner durchgeführt wird.

Die Erfindung betrifft neben dem Verfahren auch ein entsprechendes System zur Durchführung des Verfahrens. Das System ist derart aufgebaut, dass es neben einem Mittel zur Simulation des Programms zum Betrieb einer Steuerungs- und/oder Regelungseinrichtung auch ein Mittel zur Simulation eines Materialabtrags aufweist. Des Weiteren weist es vorteilhaft auch ein Mittel zur Messung des zu bearbeitenden Werkstücks auf.

Beispiele für weitere Vorteile und Einzelheiten ergeben sich aus der nachfolgenden Beschreibung eines Ausführungsbeispiels. Dabei zeigen in Prinzipdarstellung:
- FIG 1: ein Verfahren nach dem bislang bekannten Stand der Technik zur Bearbeitung eines Werkstücks,
- FIG 2: ein erfindungsgemäßes Verfahren,
- FIG 3: schematisiert eine Bearbeitungsmaschine und
- FIG 4: die Nutzung eines Intranets und/oder eines Internets zur Verbesserung von Simulationsergebnissen.

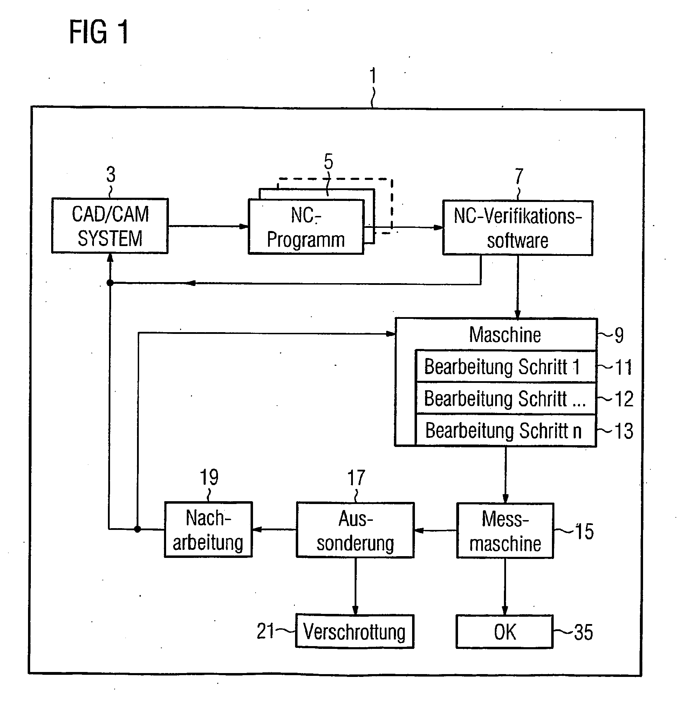

Nach dem Stand der Technik ist die in FIG 1 dargestellte Verfahrenskette 1 zur Fertigung komplexer Teile bekannt. Die komplexen Teile, d.h. Teile/Werkstücke, welche einer Bearbeitung in mehreren Schritten 11,12,13 bedürfen, werden in einem CAD-System 3 (Computer Added Design) modelliert. An der Stelle oder auch ergänzend zum CAD-System 3 könnte beispielsweise auch ein CAM-System (Computer Added Manufacturing) verwendet werden. Das CAD-System 3 erzeugt zusammen mit einem Postprozessor die für die Bearbeitung eines Werkstücks notwendigen Teileprogramme 5. Das Teileprogramm 5 ist ein NC-Programm. Für den Gesamtprozess der Bearbeitung beispielsweise eines Werkstücks können ein einziges und/oder mehrere NC-Programme 5 mit mehreren Werkzeugwechseln erzeugt werden. Es ist allerdings auch möglich für jedes Werkzeug ein eigenes NC-Programm zu erzeugen. Die Bearbeitung mit einem Werkzeug entspricht einem Teilprozess. Die NC-Programme 5 werden dann mit einem Verifikationssystem 7 getestet. Das Verifikationssystem 7 weist beispielsweise eine NC-Verifikationssoftware auf. Vericut® ist ein Beispiel für eine derartige Verifikationssoftware. Bei der Verifikation werden insbesondere Kollisionen mit einer Aufspannung des Werkstücks z.B. in einer Werkzeugmaschine und dem Werkstück überprüft. Gleichzeitig wird anhand einer Abtragssimulation überprüft, ob die NC-Programme zur gewünschten Werkstückgeometrie führen. Das heißt, das Ergebnis der Abtragssimulation wird mit dem ursprünglichen CAD-Modell verglichen. Wenn die Übereinstimmung innerhalb der festgesetzten Fehlertoleranzen liegt, werden die Programme zur Fertigung freigegeben und an die Maschinensteuerung einer Maschine, insbesondere einer Bearbeitungsmaschine 9, übertragen. Das Werkstück wird mit den NC-Programmen 5 gefertigt, was insbesondere bei Teilen, (Werkstücken) mit einem hohen Zerspanungsgrad von z.B. ca. 95%, mehrere Stunden bis Tage dauern kann. Hohe Zerspanungsgrade weisen insbesondere einen Materialabtrag von über 80% auf. Durch die Bearbeitungsmaschine 9 werden verschiedene Schritte 11, 12 und 13 der Bearbeitung des oder der Werkstücke durchgeführt. Beispielhaft sind in der Darstellung nach FIG 1 nur drei Bearbeitungsschritte 11, 12 und 13 gezeigt, jedoch sind im Schritt 12 weitere Schritte angedeutet. Das fertig gestellte Werkstück wird anschließend auf einer Messmaschine in einem Messschritt 15 vermessen und entweder zertifiziert 35 oder ausgesondert 37. Dieser Vorgang kann wiederum mehrere Tage bis Wochen dauern. Falls das Werkstück ausgesondert 17 wird, kann es entweder in einer Einrichtung zur Nachbearbeitung nachgearbeitet werden 19 (falls zu wenig Material entfernt wurde) oder muss endgültig verschrottet werden 21. In beiden Fällen der Verschrottung 21 und auch der Nachbearbeitung 19 muss aber die Produktion gestoppt und in mühevoller händischer Arbeit die Fehlerquelle ermittelt werden. Die Auffindung der Fehlerquelle dient der Reduzierung der Aussonderungsrate.

Im Folgenden werden mögliche Fehlertypen aufgelistet, welche vorteilhafter Weise identifiziert werden müssen bzw. können:
- eine fehlerhafte Teilegeometrie
- ein Maschinenfehler
- eine falsche Abmessungen eines Rohlings
- Dynamische Probleme bei der Bearbeitung (z.B.: Nachlauffehler)
- Eine fehlerhafte Aufspannung des Teils/Werkstücks
- Werkzeugprobleme
- Temperatureinflüsse bei der Bearbeitung
- Eine Verformung des Teils/Werkstücks während des Prozesses der Bearbeitung (Verbiegungen, Aufwölbungen)

Das bislang bekannte Verfahren zur Bearbeitung eines Werkstückes in mehren Schritten kann zumindest einen der im Folgenden aufgeführten Nachteile bergen:
- ein Fehler wird erst nach der Komplettbearbeitung festgestellt; Wenn bereits im ersten Teilschritt ein Problem auftritt, wird trotzdem weitergearbeitet, bis der Fehler erkannt wird; Dabei geht Maschinenzeit verloren;
- bis der Fehler erkannt ist, wird weiterproduziert; Das kann bedeuten, dass viele weitere fehlerhafte Teile produziert werden, was einen entsprechenden Verlust an Zeit und Material mit sich bringt;
- die Vermessung der Teile auf der Messmaschine 15 erfordert eine aufwändige und kostspielige Infrastruktur;
- es ist sehr schwierig, ein Problem einem Teilprozess oder einer spezifischen Fehlerquelle zuzuordnen;
- NC-Verifiktionssysteme 7 nach dem Stand der Technik haben den Nachteil, dass das Steuerungsverhalten emuliert wird; Dies führt zwangsweise dazu, dass die Abtragssimulation nur näherungsweise der Realität entspricht und deshalb geometrische Fehler im Teileprogramm nicht immer erkannt werden können.

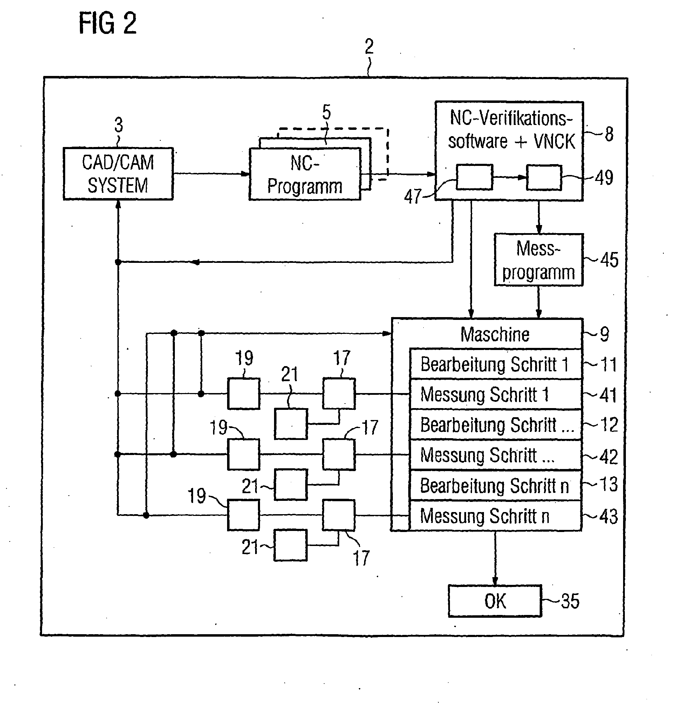

Die Darstellung gemäß FIG 2 zeigt beispielhaft ein erfindungsgemäßes Verfahren zur Bearbeitung eines Werkstücks auf einer Bearbeitungsmaschine. Die Bearbeitungsmaschine kann beispielsweise als eine Fräsmaschine oder auch eine andere Werkzeugmaschine, wie z.B. eine Bohr- oder Drehmaschine ausgebildet sein. Die Bearbeitungsmaschine könnte auch als Industrieroboter oder als Sondermaschine ausgebildet sein.

Im Unterschied zur FIG 1 ist in der FIG 2 eine NC-Verifikations-Software dargestellt, welche einen virtuellen NC-Kern VNCK beinhaltet Hieraus ergibt sich ein um den VNCK erweitertes Verifikationssystem 8. Dabei ist die Emulationssoftware für ein CNC-System durch den VNCK ersetzt worden. Dies macht eine im Vergleich zu FIG 1 verbesserte Verfahrenskette 2 möglich. Da der VNCK das Steuerungsverhalten exakt wiedergibt, können auch kleinere geometrische Abweichungen, die durch Steuerungsfunktionen wie Kompressor, Eckenverrundungen oder Werkzeugkorrekturen erzeugt werden, bereits in der Simulation erkannt werden. Weiterhin weist das erweiterte Verifikationssystem 8 eine Materialabtragssimulation auf. Die Materialabtragssimulation wird dazu benutzt, für jeden Teilschritt 11, 12 oder 13 einer Bearbeitung ein Messprogramm zu erzeugen. Bisher war es so, dass als Referenz zur Messung lediglich das CAD-Modell zur Verfügung stand. D.h., dass man immer nur das komplett bearbeitete Teil korrekt vermessen konnte. Die erweiterte NC-Verifikationssoftware mit dem unterlegten VNCK ist nun in der Lage, für jeden Bearbeitungsschritt 11, 12 und 13 den Materialabtrag exakt darzustellen. Damit ist man in der Lage, nach jedem Schritt eine Sollgeometrie zu erzeugen, die einem CAD-Modell für jeden Prozessschritt entspricht. Somit ist es möglich das Ergebnis jedes Teilschrittes zu einem Geometriemodell zu referenzieren und die Sollwertvorgaben für Kontrollmessungen nach jedem Schritt zu erzeugen. Diese Sollwertvorgaben liegen in Form von Messprogrammen 45 vor, die auf eine Maschinensteuerung geladen werden können. Zu jedem Bearbeitungsprogramm oder Programmabschnitt existiert nun das korrespondierende Messprogramm 45. Dadurch ist es möglich, das Ergebnis jedes einzelnen Bearbeitungsschrittes 11, 12 und 13 direkt auf der Maschine 9 zu überprüfen, indem beispielsweise ein Messtaster eingewechselt wird und das Messprogramm 45 abgearbeitet wird. Durch Vergleich der Soll- und Istwerte, die beide protokolliert werden, kann ein Maschinenbediener direkt erkennen, ob das Ergebnis der Bearbeitung im erlaubten Toleranzbereich liegt. Im Fehlerfall wird der Prozess sofort unterbrochen und es erfolgt eine Aussonderung 17. Der Aussonderung 17 kann abhängig von der schwere des Fehlers die verschrottung 21 oder die Nacharbeitung 19 folgen. Zur Nacharbeitung 19, welche vorteilhafter Weise wieder auf der Bearbeitungsmaschine 9 erfolgt, wird z.B. über eine CAD/CAM-System zumindest ein NC-Programm zur Nacharbeitung generiert. Ist eine Aussonderung 17 notwendig, kann eine Fehleranalyse begonnen werden. Diese Fehleranalyse kann dazu führen, dass ein oder mehrere NC-Programme 5 abgeändert werden. Diese Vorgehensweise ist gegenüber dem herkömmlichen Verfahren deutlich einfacher, da der Fehler einem einzigen Bearbeitungsschritt zugeordnet werden kann. Darüber hinaus wird vermieden, dass wertvolle Maschinenzeit mit einem Teil verschwendet wird, das bereits zerstört ist. Ist das Ergebnis jedes Teilschrittes positiv, ist durch die Messprotokolle der Nachweis erbracht, dass der Gesamtprozess erfolgreich war und das erzeugte Teil den Spezifikationen entspricht. Um die Stabilität des Bearbeitungsprozesses zu verbessern, ist es möglich, die Bearbeitungsmaschine periodisch zu kalibrieren. Dies wird durch ein Verfahren sichergestellt, mit dessen Hilfe in regelmäßigen Zeitabständen der Zustand der Maschine und damit auch ihre geometrische Güte überwacht wird (Electronic fingerprints for machine tools and production machines).

Die Verfahrenskette 2 gemäß FIG 2 zeigt also sowohl ein um einen VNCK erweitertes Verifikationssystem 8, wie auch zusätzliche Messprogramme 45 für Messschritte 41, 42 und 43, Diese zusätzlichen Messschritte 41, 42 und 43 ermöglichen die Überprüfung eines jeden Bearbeitungsschrittes 11, 12 und 13. Es ist allerdings nicht zwingend, dass jedem Bearbeitungsschritt auch ein Messschritt folgen muss. Vorteilhafter Weise ist die Anzahl der Messschritte 41, 42 und 43 frei wählbar.

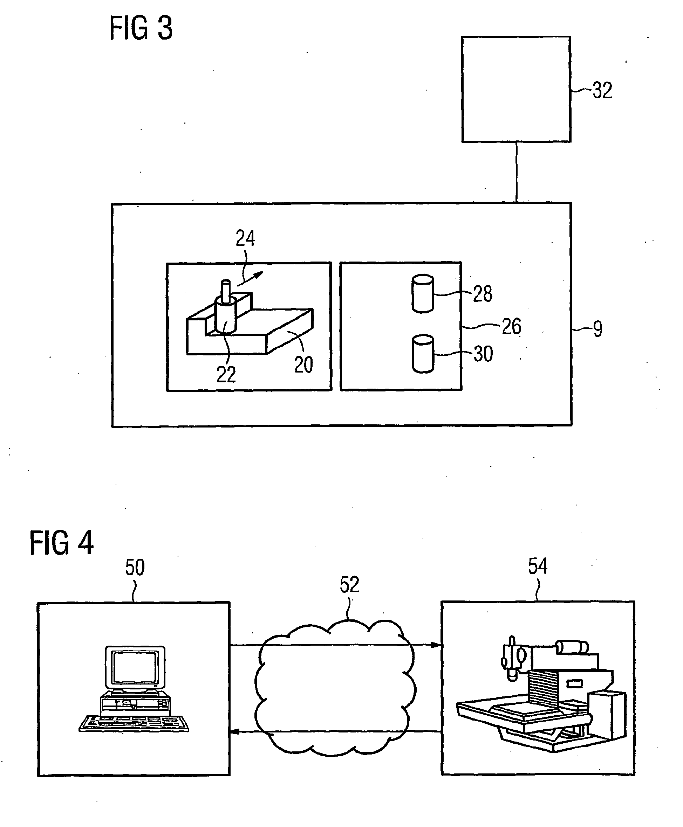

Die Darstellung gemäß FIG 3 zeigt schematisiert eine Bearbeitungsmaschine 9. Die Bearbeitungsmaschine 9 weist eine Steuerungs- und/oder Regelungseinrichtung 26 auf. Diese Steuerungs- und/oder Regelungseinrichtung 26 ist zur Abarbeitung von Bearbeitungsdatensätzen 28 vorgesehen. Zur Abarbeitung ist ein Programm 30 vorgesehen. Dieses Programm ist ein NC-Kern, welches als eine Art Betriebssystem der Steuerungs- und/oder Regelungseinrichtung 26 dient. Der Bearbeitungsdatensatz 28 ist zur Beschreibung der Bearbeitung eines Werkstücks 20 mit einem Werkzeug 22 vorgesehen. Die Darstellung gemäß FIG 3 zeigt ferner einen Simulationsrechner 32, welcher beispielsweise zur Simulation des NC-Kerns herangezogen werden kann. Dies entspricht dann einem virtuellen NC-Kern (VNCK).

Die Darstellung gemäß FIG 4 zeigt eine Recheneinrichtung 50 zur Ausführung einer Arbeitsvorbereitung. Die Arbeitsvorbereitung betrifft beispielsweise eine Steuerungssimulation, ein Simulationssystem zur Simulation zumindest eines Teil einer industriellen Maschine sowie die Möglichkeit eines Vergleiches von Soll- und Istwerten. Das Simulationssystem weist zumindest ein Simulationsmodell auf, welches mittels Software und/oder Hardware realisierbar ist. Mittels einer Internet- und/oder Intranetverbindung 52 lassen sich Daten wie z.B. Simulationsergebnisse, welche beispielsweise die Sollgeometrie eines Werkstückes betreffen, zu einer industriellen Maschine 54 übertragen. In dieser industriellen Maschine sind insbesondere Maschinendaten wie auch Istwerte, welche während des Betriebes der industriellen Maschine 54 aufgenommen und gespeichert werden, vorhanden. Die datentechnische Verbindung über das Internet und/oder das Intranet 52 lässt sich zur Übertragung der Maschinendaten bzw. der aus der industriellen Maschine 54 gewonnenen Istwerte zur Arbeitsvorbereitung bzw. zur externen Simulationsdurchführung übertragen. Dabei werden vorteilhafterweise für die Simulation eines Vorganges auf der industriellen Maschine 54 aktuelle Maschinendaten wie z.B. Daten, welche erst bei der Betriebnahme der industriellen Maschine 54 gewonnen wurden, verwendet. Derartige Daten betreffen beispielsweise Parameterdaten von Reglern wie z.B. Verstärkungen und/oder Integrationszeiten.

## Patentansprüche

1. Verfahren zur Qualitätssicherung beim Betrieb einer industriellen Maschine (54) zur Bearbeitung eines Werkstücks (20), wobei die industrielle Maschine (54) insbesondere eine der folgenden Maschinentypen ist:
eine Bearbeitungsmaschine, eine Produktionsmaschine oder ein Handhabungsautomat, wobei zumindest ein Teil des Betriebes der industriellen Maschine (54) mittels eines Simulationsmodells simuliert wird,
**dadurch gekennzeichnet, dass** Simulationsergebnisse und reale Daten aus dem Betrieb der industriellen Maschine (54) gespeichert und mittels eines Verifikationssystems (8) automatisch verglichen werden und
dass in Abhängigkeit vom Ergebnis des Vergleichs der Simulationsergebnisse mit den realen Daten automatisch eine Aussonderung (17) des Werkstücks (20) erfolgt.

2. Verfahren nach Anspruch 1,
**dadurch gekennzeichnet, dass** die Bearbeitung des Werkstücks (20) eine Mehrzahl aufeinander folgender Bearbeitungsschritte (11, 12, 13) umfasst und
dass bei jedem Bearbeitungsschritt (11, 12, 13) die Simulationsergebnisse mit den realen Daten verglichen werden und in Abhängigkeit vom Ergebnis des Vergleichs automatisch eine Aussonderung (17) des Werkstücks (20) erfolgt.

3. Verfahren nach Anspruch 1 oder 2,
**dadurch gekennzeichnet, dass** die Simulation auf der industriellen Maschine (54) durchgeführt wird, wobei zumindest teilweise eine Parametrierung des Simulationsmodells mittels einer Einrichtung (50) zur Parametrierung des Simulationsmodells durchgeführt wird.

4. Verfahren nach einem der Ansprüche 1 oder 2,
**dadurch gekennzeichnet, dass** die Simulation auf einer externen Simulationseinrichtung (50) durchgeführt wird.

5. Verfahren nach einem der vorangehenden Ansprüche,
**dadurch gekennzeichnet, dass** die industrielle Maschine (54) eine numerisch gesteuerte Bearbeitungsmaschine (9) ist,
dass zur Steuerung und/oder Regelung der numerisch gesteuerten Bearbeitungsmaschine (9) ein Bearbeitungsdatensatz (28) vorgesehen ist, welcher in einer Steuerungs- und/oder Regelungseinrichtung (26) der numerisch gesteuerten Bearbeitungsmaschine (9) zusammen mit einem Programm (30) zum Betrieb der Steuerungs- und/oder Regelungseinrichtung (26) ablauffähig ist,
dass mittels des Bearbeitungsdatensatzes (28) zusammen mit dem Programm (30) zum Betrieb der Steuerungs- und/oder Regelungseinrichtung (26) in einem Simulationsschritt Simulationsdaten (47) erzeugt werden und
dass zur Simulation insbesondere das Programm (30) zum Betrieb der Steuerungs- und/oder Regelungseinrichtung (26) entweder simuliert wird oder selbst abläuft.

6. Verfahren nach einem der vorangehenden Ansprüche,
**dadurch gekennzeichnet, dass** zur Bearbeitung des Werkstückes (20) zwei oder mehrere Bearbeitungsschritte (11,12,13) vorgesehen sind, wobei mittels einer Materialabtragssimulation aus den Simulationsdaten (47) simulierte Materialabtragsdaten (49) erzeugt werden.

7. Verfahren nach Anspruch 5 und Anspruch 6,
**dadurch gekennzeichnet, dass** in der Materialabtragssimulation Daten aus dem Bearbeitungsdatensatz (28) und/oder aus dem Programm (30) zum Betrieb der Steuerungs- und/oder Regelungseinrichtung (26) übernommen werden.

8. Verfahren nach Anspruch 6 oder 7,
**dadurch gekennzeichnet, dass** aus den Materialabtragsdaten (49) simulierte Geometriedaten des Werkstücks (20) erzeugt werden.

9. Verfahren nach Anspruch 8,
**dadurch gekennzeichnet, dass** ein Werkstück (20) gemäß eines ersten Bearbeitungsdatensatzes (28) in einem ersten Bearbeitungsschritt (11) bearbeitet wird und Geometriedaten des Werkstückes (20) gemessen werden, wonach die gemessenen Geometriedaten des Werkstückes (20) mit den simulierten Geometriedaten verglichen werden.

10. Verfahren nach einem der Ansprüche 6 bis 8,
**dadurch gekennzeichnet, dass** ein Werkstück (20) gemäß eines ersten Bearbeitungsdatensatzes (28) in einem ersten Bearbeitungsschritt (11) bearbeitet wird und Geometriedaten des Werkstückes (20) gemessen werden, wonach aus den gemessenen Geometriedaten des Werkstückes (20) Materialabtragsdaten errechnet werden, wonach die errechneten Materialabtragsdaten mit den simulierten Materialabtragsdaten (49) verglichen werden.

11. Verfahren nach einem der Ansprüche 8 oder 9,
**dadurch gekennzeichnet, dass** der Unterschied zwischen den gemessenen Geometriedaten und den simulierten Geometriedaten bzw. zwischen den gemessenen Materialabtragsdaten und den simulierten Materialabtragsdaten (49) berechnet wird, wonach abhängig von einem Überschreiten einer Differenzschwelle ein für einen folgenden Bearbeitungsschritt vorgesehener Bearbeitungsdatensatz (28) abgeändert wird.

12. Verfahren nach einem der Ansprüche 6 bis 11,
**dadurch gekennzeichnet, dass** der Bearbeitungsdatensatz (28) unter Verwendung eines CAD/CAM-Systems (3) erstellt wird und dem CAD/CAM-System (3) simulierte Daten und/oder gemessene Daten und/oder berechnete Daten übergeben werden.

13. Verfahren nach einem der Ansprüche 6 bis 12,
**dadurch gekennzeichnet, dass** die Simulation auf der Steuerungs- und/oder Regelungseinrichtung (26) oder auf einem Simulationsrechner (32) durchgeführt wird.

14. System mit Mitteln zur Durchführung des Verfahrens nach einem der Ansprüche 6 bis 13,
nämlich Mittel zum Simulieren der Maschine (54) mit einem Simulationsmodell (50), ein Verifikationssystem (8) als Mittel zum automatischen Vergleich von Simulationsergebnissen und realen Daten und schließlich Mittel zur automatischen Aussonderung von Werkstücken (20) in Abhängigkeit vom Vergleichsergebnis, sowie
a) einem Mittel zur Simulation des Programms (30) zum Betrieb einer Steuerungs- und/oder Regelungseinrichtung
b) einem Mittel zur Simulation eines Materialabtrags an einem zu bearbeitenden Werkstücks (20),
c) einem Mittel zur Messung des zu bearbeitenden Werkstücks (20) und
d) einem Mittel zum Vergleich von Ergebnissen der Simulation und Ergebnissen der Messung sowie zum automatischen Aussondern (17) des Werkstücks (20).

## Claims

1. Quality assurance method when operating an industrial machine (54) for processing a work piece (20), wherein the industrial machine (54) is in particular one of the following types of machine:
a processing machine, a production machine or an automated manipulation device, wherein at least part of the operation of the industrial machine (54) is simulated by means of a simulation model, **characterized in that** simulation results and real data from the operation of the industrial machine (54) are stored and automatically compared by means of a verification system (8) and, **in that** an automatic rejection (17) of the workpiece (20) is carried out depending on the result of the comparison of the simulation results with the real data.

2. Method according to Claim 1, **characterized in that** the processing of the workpiece (20) comprises a plurality of successive processing steps (11,12,13), and **in that** at each processing step (11,12,13) the simulation results are compared with the real data and depending on the result of the comparison an automatic rejection (17) of the workpiece (20) is carried out.

3. Method according to Claim 1 or 2, **characterized in that** the simulation is carried out on the industrial machine (54), wherein parametrization of the simulation model is carried out at least partially by means of a device (50) for parametrizing the simulation model.

4. Method according to one of Claims 1 or 2, **characterized in that** the simulation is carried out on an external simulation device (50).

5. Method according to one of the preceding claims, **characterized in that** the industrial machine (54) is a numerically-controlled processing machine (9), **in that** in order to perform open-loop and/or closed-loop control of the numerically-controlled processing machine (9) a processing data record (28) is provided which can run in an open-loop and/or closed-loop control device (26) of the numerically-controlled processing machine (9) together with a program (30) for operating the open-loop and/or closed-loop control device (26), **in that** simulation data (47) are generated by means of the processing data record (28) together with the program (30) for operating the open-loop and/or closed-loop control device (26) in a simulation step, and **in that** for the purpose of the simulation, in particular the program (30) for operating the open-loop and/or closed-loop control device (26) is either simulated or runs itself.

6. Method according to one of the preceding claims, **characterized in that** two or more processing steps (11, 12, 13) are provided for processing the workpiece (20), wherein material erosion data (49) which are simulated from the simulation data (47) are generated by means of a material erosion simulation.

7. Method according to Claim 5 and Claim 6, **characterized in that** data from the processing data record (28) and/or from the program (30) for operating the open-loop and/or closed-loop control device (26) are adopted in the material erosion simulation.

8. Method according to Claim 6 or 7, **characterized in that** simulated geometry data of the workpiece (20) are generated from the material erosion data (49).

9. Method according to Claim 8, **characterized in that** a workpiece (20) is processed in accordance with a first processing data record (28) in a first processing step (11), and geometry data of the workpiece (20) are measured, after which the measured geometry data of the workpiece (20) are compared with the simulated geometry data.

10. Method according to one of Claims 6 to 8, **characterized in that** a workpiece (20) is processed in accordance with a first working data record (28) in a first processing step (11), and geometry data of the workpiece (20) are measured, after which material erosion data are calculated from the measured geometry data of the workpiece (20), after which the calculated material erosion data are compared with the simulated material erosion data (49).

11. Method according to one of Claims 8 or 9, **characterized in that** the difference between the measured geometry data and the simulated geometry data or between the measured material erosion data and the simulated material erosion data (49) is calculated, after which a processing data record (28) which is provided for a subsequent processing step is modified as a function of a difference threshold being exceeded.

12. Method according to one of Claims 6 to 11, **characterized in that** the processing data record (28) is created using a CAD/CAM system (3) and simulated data and/or measured data and/or calculated data are transferred to the CAD/CAM system (3).

13. Method according to one of Claims 6 to 12, **characterized in that** the simulation is carried out on the open-loop or closed-loop control device (26) or on a simulation computer (32) .

14. System having means for carrying out the method according to one of Claims 6 to 13,
namely means for the simulation of the machine (54) with a simulation model (50), a verification system (8) as a means for the automatic comparison of simulation results and real data and finally means for the automatic rejection of workpieces (20) depending on the comparison result, as well as
a) a means for simulating the program (30) for operating an open-loop and/or closed-loop control device,
b) a means for simulating material erosion on a workpiece (20) to be processed,
c) a means for measuring the workpiece (20) to be processed, and
d) a means for the comparison of results of the simulation and results of the measurement as well as for the automatic rejection (17) of the workpiece.

## Revendications

1. Procédé de contrôle de qualité lors du fonctionnement d'une machine ( 54 ) industrielle d'usinage d'une pièce ( 20 ), la machine ( 54 ) industrielle étant, notamment, une machine de type suivant :
une machine d'usinage, une machine de production ou un automate de manipulation, dans lequel au moins une partie du fonctionnement de la machine ( 54 ) industrielle est simulé au moyen d'un modèle de simulation,
**caractérisé en ce que** l'on mémorise des résultats de simulation et des données réelles à partir du fonctionnement de la machine ( 54 ) industrielle et on les compare automatiquement au moyen d'un système ( 8 ) de vérification et
**en ce que**, en fonction du résultat de la comparaison des résultats de simulation aux données réelles, on effectue automatiquement un tri ( 17 ) de la pièce ( 20 ).

2. Procédé suivant la revendication 1,
**caractérisé en ce que** l'usinage de la pièce ( 20 ) comprend une multiplicité de stades ( 11, 12, 13 ) d'usinage qui se succèdent et
**en ce que**, pour chaque stade ( 11, 12, 13 ) d'usinage, on compare le résultat de la simulation aux données réelles et, en fonction du résultat de la comparaison, on effectue automatiquement un tri ( 17 ) de la pièce ( 20 ).

3. Procédé suivant la revendication 1 ou 2,
**caractérisé en ce qu'**on effectue la simulation sur la machine ( 54 ) industrielle, dans lequel on effectue au moins en partie une paramétrisation du modèle de simulation au moyen d'un dispositif ( 50 ) de paramétrisation du modèle de simulation.

4. Procédé suivant la revendication 1 ou 2,
**caractérisé en ce qu'**on effectue la simulation sur un dispositif ( 50 ) extérieur de simulation.

5. Procédé suivant l'une des revendications précédentes,
**caractérisé en ce que** la machine ( 54 ) industrielle est une machine ( 9 ) d'usinage à commande numérique,
**en ce que**, pour la commande et/ou la régulation de la machine ( 9 ) d'usinage à commande numérique, on prévoit un jeu ( 28 ) de données d'usinage, qui est susceptible de se dérouler dans un dispositif ( 26 ) de commande et/ou de régulation de la machine ( 9 ) d'usinage à commande numérique, ensemble avec un programme ( 30 ) pour le fonctionnement du dispositif ( 26 ) de commande et/ou de régulation,
**en ce qu'**on produit, au moyen du jeu ( 28 ) de données d'usinage, ensemble avec le programme ( 30 ) pour le fonctionnement du dispositif ( 26 ) de commande et/ou de régulation, dans un stade de simulation, des données ( 47 ) de simulation et
**en ce que**, pour la simulation, notamment le programme ( 30 ) pour le fonctionnement du dispositif ( 26 ) de commande et/ou de régulation est simulé ou se déroule soi-même.

6. Procédé suivant l'une des revendications précédentes,
**caractérisé en ce que**, pour l'usinage de la pièce ( 20 ), on prévoit deux ou plusieurs stades ( 11, 12, 13 ) d'usinage, dans lequel on produit, au moyen d'une simulation d'enlèvement de matériau à partir des données ( 47 ) de simulation, des données ( 49 ) simulées d'enlèvement de matériau.

7. Procédé suivant la revendication 5 et la revendication 6,
**caractérisé en ce que**, dans la simulation d'enlèvement de matériau, on prend en charge des données provenant du jeu ( 28 ) de données d'usinage et/ou du programme ( 30 ) pour le fonctionnement du dispositif ( 26 ) de commande et/ou de régulation.

8. Procédé suivant la revendication 6 ou 7,
**caractérisé en ce qu'**on produit des données de géométrie simulées de la pièce ( 20 ) à partir des données ( 49 ) d'enlèvement de matériau.

9. Procédé suivant la revendication 8,
**caractérisé en ce qu'**on usine la pièce ( 20 ) suivant un premier jeu ( 28 ) de données d'usinage dans un premier stade ( 11 ) d'usinage et on mesure des données de géométrie de la pièce ( 20 ), puis on compare les données de géométrie mesurées de la pièce ( 20 ) aux données de géométrie simulées.

10. Procédé suivant l'une des revendications 6 à 8,
**caractérisé en ce qu'**on usine une pièce ( 20 ) suivant un premier jeu ( 28 ) de données d'usinage dans un premier stade ( 11 ) d'usinage et on mesure des données de géométrie de la pièce ( 20 ), puis on calcule des données d'enlèvement de matériau à partir des données de géométrie mesurées de la pièce ( 20 ), puis on compare les données d'enlèvement de matériau calculées aux données ( 49 ) d'enlèvement de matériau simulées.

11. Procédé suivant l'une des revendications 8 ou 9,
**caractérisé en ce qu'**on calcule la différence entre les données de géométrie mesurées et les données de géométrie simulées ou entre les données d'enlèvement de matériau mesurées et les données ( 49 ) d'enlèvement de matériau simulées, puis, en fonction d'un dépassement d'un seuil de différence, on modifie un jeu ( 28 ) de données d'usinage prévues pour un stade d'usinage suivant.

12. Procédé suivant l'une des revendications 6 à 11,
**caractérisé en ce qu'**on élabore le jeu ( 28 ) de données d'usinage en utilisant un système ( 3 ) CAD/CAM et on transfère au système ( 3 ) CAD-CAM des données simulées et/ou des données mesurées et/ou des données calculées.

13. Procédé suivant l'une des revendications 6 à 12,
**caractérisé en ce qu'**on effectue sur un ordinateur ( 32 ) de simulation la simulation sur le dispositif ( 26 ) de commande et/ou de régulation.

14. Système comprenant des moyens pour effectuer les procédés suivant l'une des revendications 6 à 13,
en fait, des moyens de simulation de la machine ( 54 ) par un modèle ( 50 ) de simulation, un système ( 8 ) de vérification comme moyen de comparaison automatique de résultats de simulation et de données réelles et enfin un moyen de tri automatique de la pièce ( 20 ) en fonction du résultat de la comparaison,
ainsi que
a) un moyen de simulation du programme ( 30 ) pour le fonctionnement d'un dispositif de commande et/ou de régulation
b) un moyen de simulation d'un enlèvement de matériau sur une pièce ( 20 ) à usiner,
c) un moyen de mesure de la pièce ( 20 ) à usiner et
d) un moyen de comparaison de résultats de la simulation et de résultats de la mesure ainsi que de tri ( 17 ) automatique de la pièce ( 20 ).
